# EUROPEAN PATENT SPECIFICATION

(11) **EP 2 760 668 B1**
(45) Date of publication and mention of the grant of the patent: **06.11.2019**
(21) Application number: 11873528.1
(22) Date of filing: 30.09.2011
(51) Int. Cl.: B32B 3/30, B32B 7/06, B32B 7/12, B32B 27/08, B32B 27/20, B32B 27/30, B32B 27/32, B32B 33/00, C08K 3/22, C08K 3/26, C08K 3/34, E04F 13/08, C09J 7/29

(54) **DECORATIVE FILM HAVING LOW GROSS HEAT OF COMBUSTION**
DEKORATIVE FOLIE MIT NIEDRIGER BRUTTOVERBRENNUNGSWÄRME
FILM DÉCORATIF À FAIBLE CHALEUR BRUTE DE COMBUSTION

(43) Date of publication of application: 06.08.2014
(73) Proprietor: 3M Innovative Properties Company, St. Paul, MN 55133-3427 (US)
(72) Inventor: LIN, Haohao, Saint Paul, Minnesota 55133-3427 (US); KANNO, Mamoru, Saint Paul, Minnesota 55133-3427 (US); TSE, Kiu-Yuen, Saint Paul, Minnesota 55133-3427 (US); PYUN, Eumi, Saint Paul, Minnesota 55133-3427 (US); ZHENG, Guang, Saint Paul, Minnesota 55133-3427 (US); ZHANG, Ying, Saint Paul, Minnesota 55133-3427 (US); KASHIWAZAKI, Yuji, Saint Paul, Minnesota 55133-3427 (US); SHAKLEE, Charles A., Saint Paul, Minnesota 55133-3427 (US); LORIMOR, Lynn E., Saint Paul, Minnesota 55133-3427 (US)
(74) Representative: Vossius & Partner Patentanwälte Rechtsanwälte mbB
(86) International application number: PCT/CN2011/080445
(87) International publication number: WO 2013/044501

(56) References cited:
- WO-A1-2005/108062
- WO-A1-2007/064322
- CN-A- 1 436 661
- CN-A- 1 884 753
- CN-A- 101 642 974
- CN-A- 101 909 883
- CN-U- 201 483 850
- US-A- 5 314 969

## Description

### FIELD

The present disclosure relates to, among other things, decorative films, particularly decorative films having a low gross heat of combustion, such as a less than 4 megajoules per square meter, or low flammability.

### BACKGROUND

Decorative films, such as Di-Noc® sheets (3M Company), may be used as design or aesthetic features for walls, ceilings and the like. Such sheets often have high gross heats of combustion. Forming sheets with lower heats of combustion or lower flammability, while maintaining mechanical properties, presents numerous manufacturing and design challenges.

WO 2007/064322 A1 describes a composition of a weatherable roofing composite product.

### BRIEF SUMMARY

The present disclosure describes, among other things, decorative sheets having a gross heat of combustion of 4 megajoules per square meter or less. The decorative sheets of the invention have a gross heat of combustion of 4 megajoules per square meter or less when measured by oxygen bomb calorimetry according to standard GB/T 14402-2007 - Reaction to Fire Tests for Building Materials and Products - Determination of Heat of Combustion or according to standard ISO 1716. The decorative sheets described herein, in some embodiments, may have a Flame Spread Index of 15 or less or a Smoke Developed Index of 50 or less when tested according to ASTM E84 (Standard Test Method for Surface Burning Characteristics of Building Materials).

The decorative sheet of the invention includes a decorative base layer, an adhesive layer disposed on a surface of the decorative base layer; and a transparent layer disposed on an opposing surface of the base layer from the adhesive layer. The base layer includes one or more inorganic non-combustible fillers at a weight percentage of between 10% and 50%. The adhesive layer comprises a pressure sensitive adhesive. The decorative sheet has a thickness of between 90 micrometers and 250 micrometers.

In embodiments, the decorative sheet may have a Flame Spread Index of 15 or less or a Smoke Developed Index of 50 or less when tested according to ASTM E84.

In embodiments, a decorative sheet may comprise polyvinylchloride. The decorative base layer may have a thickness of between 60 micrometers and 150 micrometers. The adhesive layer may have a thickness of between 15 micrometers and 50 micrometers. The transparent layer may comprise polyvinylidene fluoride and has a thickness of between 15 micrometers and 50 micrometers. The decorative sheet may also have a Flame Spread Index of 15 or less and a Smoke Developed Index of 50 or less when tested according to ASTM E84.

In embodiments, the decorative base layer may comprise polyvinylchloride. The decorative base layer may have a thickness of between 60 micrometers and 150 micrometers. The adhesive layer may have a thickness of between 15 micrometers and 50 micrometers. The transparent layer may comprise polyvinylidene fluoride and has a thickness of between 15 micrometers and 50 micrometers.

One or more embodiments of the devices, articles and methods described herein may provide one or more advantages over prior decorative sheets or films. These advantages will be readily apparent to those of skill in the art upon reading the disclosure presented herein.

### BRIEF DESCRIPTION OF THE DRAWINGS

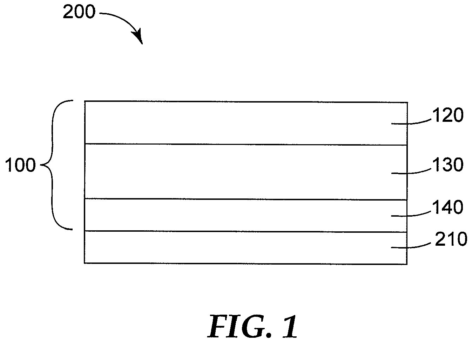

**FIG. 1** is a schematic cross-sectional diagram of a system including a release liner and an embodiment of a decorative sheet. This schematic drawing is not necessarily to scale.

### DETAILED DESCRIPTION

In the following detailed description, reference is made to the accompanying drawing that forms a part hereof, and in which is shown by way of illustration an embodiment of a decorative sheet. It is to be understood that other embodiments are contemplated and may be made without departing from the scope of the present disclosure, as defined by the claims. The following detailed description, therefore, is not to be taken in a limiting sense.

All scientific and technical terms used herein have meanings commonly used in the art unless otherwise specified. The definitions provided herein are to facilitate understanding of certain terms used frequently herein and are not meant to limit the scope of the present disclosure.

As used in this specification and the appended claims, the singular forms "a", "an", and "the" encompass embodiments having plural referents, unless the content clearly dictates otherwise.

As used in this specification and the appended claims, the term "or" is generally employed in its sense including "and/or" unless the content clearly dictates otherwise.

As used herein, "have", "having", "include", "including", "comprise", "comprising" or the like are used in their open ended sense, and generally mean "including, but not limited to." It will be understood that the terms "consisting of' and "consisting essentially of' are subsumed in the term "comprising," and the like. For example, a decorative sheet comprising an adhesive layer, a decorative base layer and a transparent layer may consist of, or consist essentially of, the adhesive layer, the decorative base layer and the transparent layer.

"Consisting essentially of', as it relates to a compositions, articles, systems, apparatuses or methods, means that the compositions, articles, systems, apparatuses or methods include only the recited components or steps of the compositions, articles, systems, apparatuses or methods and, optionally, other components or steps that do not materially affect the basic and novel properties of the compositions, articles, systems, apparatuses or methods. For example, decorative sheets described herein have low gross heats of combustion. Components that significantly increase the gross heat of combustion (e.g., result in a heat of combustion of greater than 4 megajoules per square meter) of the sheets may be considered, in some cases, to materially affect the basic and novel properties of the sheets.

Any direction referred to herein, such as "top," "bottom," "left," "right," "upper," "lower," "above," below," and other directions and orientations are described herein for clarity in reference to the figures and are not to be limiting of an actual device, article or system or use of the device, article or system. Many of the devices, articles or systems described herein may be used in a number of directions and orientations.

The present disclosure describes, among other things, decorative sheets having a gross heat of combustion of 4 megajoules per square meter or less. Current commercially available decorative sheets typically have substantially higher gross heats of combustion. As described herein, it has been found that decorative sheets can be made to attain desirable mechanical properties, including handleability, workability, adhesion, durability, elongation, handling, printability and the like, while reducing gross heat of combustion relative to currently available sheets.

To achieve a decorative sheet having mechanical properties similar to commercially available decorative sheets but with a lower gross heat of combustion, a variety of materials, thicknesses, fillers and flame retardants were tested or modified to identify suitable components and layers for the decorative sheets described herein.

It has been found that reduced gross heat of combustion can be obtained by including inorganic non-combustible inorganic fillers into a decorative base layer of the decorative a decorative sheet without substantially negatively impacting mechanical properties or manufacturability of the sheet. Alterations to transparent and adhesive layers may also be made as described herein to further reduce heat of combustion while maintaining desirable properties of the decorative sheet. It has also been found that the decorative sheets described herein may also exhibit reduced flammability relative to currently available decorative sheets.

The decorative sheets described herein may be used for any suitable purpose, including but not limited to coverings, accents, or design features for interior or exterior walls, ceilings, floors or the like. Accordingly, the decorative sheets described herein may be advantageously used in environments or situations in which reduced heat of combustion or reduced flammability are desired.

Referring now to **FIG. 1**, a schematic diagram of a system **200** including a release liner **210** and a decorative sheet **100** is shown. The decorative sheet **100**, in the depicted embodiment, includes a decorative base layer **130**, an adhesive layer **140** disposed on a surface of the base layer **130**, and a transparent layer **120** disposed on a surface of the base layer **130** opposite the adhesive layer **140**. It will be understood that the various layers **120**, **130**, **140** of the decorative sheet **100** may include more than one sublayer (not shown). For example, the base layer **130** or the transparent layer **120** may include one or more polymeric films.

The overall gross heat of combustion of the sheet **100** is 4 MJ/m² or less. As heat of combustion is additive, the cumulative gross heat of combustion of the individual layers (the adhesive layer **140**, the decorative base layer **130**, and the transparent layer **120**) that make up the sheet **100** is preferably about 4 MJ/m² or less. In embodiments, the transparent layer **120** has a gross heat of combustion of 1 MJ/m² or less. In embodiments, the adhesive layer **140** has a gross heat of combustion of 1 MJ/m² or less. In embodiments, the decorative base layer **130** has a gross heat of combustion of 2 MJ/m² or less. Of course, the layers **120**, **130**, **140** may have any suitable heat of combustions such that the cumulative total of the gross heats of combustion of the layers is 4 megajoules per square meter or less.

As indicated below in the Examples, one way to reduce heat of combustion per unit of area is to reduce the thickness of one or more layers of the sheet. However, reducing thickness of the layers or the overall sheet thickness can substantially negatively impact mechanical properties of the sheet **100**. By way of example, if the sheet **100** is too thin, it may be more prone to wrinkling or may not hide surface imperfections as well as a thicker sheet. Accordingly, additional surface preparation may be needed prior to application of a thin sheet to, e.g., a wall, which would generally be considered undesirable.

The thickness of the decorative sheet of the invention **100** described herein is between 85 micrometers and 250 micrometers, such as between 100 micrometers and 200 micrometers, between 110 micrometers and 170 micrometers, or between 120 micrometers and 160 micrometers. A suitable balance between sheet mechanical properties and gross heat of combustion may be achieved as described herein to arrive at a decorative sheet having desirable mechanical properties and having a gross heat of combustion of 4 megajoules per square meter or less.

To maintain the handling properties or printability, the decorative base layer **130** should maintain a thickness typical of decorative sheets. Accordingly, maintaining thickness of this layer while lowering gross heat of combustion presents unique challenges. As described in the Examples below, it has been found that inorganic non-combustible fillers effectively reduce the gross heat of combustion of a base layer **130** relative to a base layer of same material but without the filler and of same thickness. In contrast, tested organic flame retardants were found to be ineffective in reducing gross heat of combustion. It is believed that organic flame retardants such as (i) oligomeric bisphoshpate fire retardants, such as bis-xylenylphosphate (PX-200 available from Daihachi Chemical Industry Co., Ltd.); (ii) aromatic, phenolic and cyclic brominated flame retardants, such as polybrominated diphenyl oxide, decabromodiphenyl oxide, cyclic aliphatic, hexabromocyclododecane and Saytex 8010 available from Albemarle Japan Corporation; (iii) antimony trioxide (e.g., antimony trioxide MSA available from Yamanaka Co., Ltd.); and (iv) the like, would be ineffective in reducing gross heat of combustion.

In embodiments, the decorative base layer **130** is a colored or patterned film. Colored or patterned films may be colored or patterned in any suitable manner. For example, a coloring agent or die may be incorporated into a material for forming the film, or a color or pattern may be printed onto a surface of the film to produce the colored or patterned film. Any suitable colored or patterned film may be employed in the base layer **130.** In embodiments, the films of the base layer **130** are formed from synthetic resins such as polyvinylchloride, polyvinyl fluoride, polyvinylidene fluoride polyester, polyolefin resin, or (meth)acrylic resin. Polyvinylchloride resin is readily workable, easily processed, and is relatively inexpensive, making it a good choice for forming the base layer **130**.

The decorative base layer of the invention **130** contains between 10% and 50% non-combustible inorganic filler by weight, such as between 10 wt% and 40 wt%, between 10 wt% and 30 wt%, or about 20 wt% non-combustible inorganic filler. The presence of inorganic fillers in amounts exceeding 50 wt% may undesirably limit elongation of the film and may present processing problems. Any suitable non-combustible inorganic filler may be used. Suitable inorganic non-combustible fillers include CaCO₃, Mg(OH)₂, Al(OH)₃, SiO₂, clay (such as montmorillonite or kaolin) and the like.

If the decorative base layer **130** contains less than 10 wt% inorganic filler (e.g., no inorganic filler), the decorative base layer **130** is preferably thin or is formed from a material having a low gross heat of combustion.

In embodiments, the base layer **130** has a thickness of between 60 micrometers to 150 micrometers, such as 60 micrometers to 120 micrometers, 60 micrometers to 100 micrometers, or about 80 micrometers. As illustrated in the Examples below, a base layer PVC film having a thickness of 80 micrometers and having 10% or more inorganic non-combustible filler can have a gross heat of combustion of less than 2 MJ/m². As can be derived from the Examples below, a PVC film having a thickness of about 150 micrometers and about 50% by weight inorganic non-combustible filler should have a gross heat of combustion of about 2 MJ/m²; e.g., approximately MJ/m².

Decorative base films may be formed by any suitable method, such as casting or calendaring. Because calendaring tends to produce thicker film having handling properties often desired for decorative sheets and tends to be more economical than casting, calendaring may be preferred in some instances. For PVC, with or without inorganic filler, calendaring may be used to produce films as thin as 50 micrometers to 60 micrometers.

One or more inorganic non-combustible fillers may be incorporated into a decorative base layer film in any suitable manner. For example, the inorganic noncombustible filler may be mixed or blended into a solvent containing a polymer (e.g, if the film is to be cast), into a melted polymer (e.g., if the film is to be extruded or calendared), or the like.

The adhesive layer comprised in the decorative sheet of the invention **140** comprises a pressure sensitive adhesive. Examples of suitable adhesives include acrylic adhesives, rubber-based adhesives and silicone adhesives. One example of an acrylic adhesive contains 100 parts ACRYSET AST-8167E (available from NIPPON SHOKUBAI CO., LTD., 38% solids) and 2 parts by mass of cross-linker (COLONATE L-55E available from NIPPON POLYURETHANE INDUSTRY CO., LTD., 55% solids). One example of a silicone adhesive is TL-1, which can be prepared as a 60/40 mixture of MQ-Resin Powder 803 TF (Wacker Chemical Corporation) and Xiameter OHX-4070 (Dow Corning) cured by e-beam radiation. Of course any other suitable adhesive may be used.

The adhesive may be applied to the base layer **130** via any suitable process. For example, the adhesive may be applied to a surface of a release liner **210** and dry laminated to the surface of the base layer **130**.

Preferably, the adhesive layer **140** sufficiently adheres the sheet **100** to a surface suitable for purposes of using the sheet as a decorative sheet. In general, an adhesion of 15N/25mm or greater (substrate: bonderized steel plate, aging conditions: 20 degrees C for 48 hours, peel angle: 90 degrees) would be considered suitable for purposes of a decorative sheet.

The adhesive layer **140** may be of any suitable thickness as long as it provides sufficient adhesion for the sheet **100**. While thin adhesive layers **140** are preferred for reducing gross heat of combustion, thin layers may not provide sufficient adhesion for the sheet. It will be understood that the thickness of the adhesive layer **140** for purposes of achieving suitable heats of combustion, as well as adhesion, will depend on the adhesive used.

In embodiments, the adhesive layer **140** has a thickness of between 10 micrometers and 60 micrometers, such as between 10 micrometers and 50 micrometers, between 15 micrometers and 50 micrometers, between 20 micrometers and 40 micrometers, between 20 micrometers and 30 micrometers, or the like.

As illustrated in the Examples below, an acrylic adhesive layer having a thickness of 24 micrometers maintained sufficient adhesive properties for a decorative sheet and had a gross heat of combustion of 1 MJ/m² or less. By way of further example, a silicone based adhesive, TL-1, at a thickness of 40 micrometers is shown below to have sufficient adhesive properties for a decorative sheet and to have a gross heat of combustion of 1 MJ/m² or less.

The transparent layer **120** may be any suitable film that allows the color or pattern of the underlying decorative base layer **130** to be seen. Of course, the transparent layer **120**, or portions thereof, may be somewhat opaque while still allowing aspects of the color or pattern of the base layer **130** to be seen through the transparent layer **120**. As used herein, "transparent" means that objects situated beyond the transparent object or layer are capable of being clearly seen through the transparent object or layer. In the context of decorative films it will be appreciated that the transparent layer may scatter some amount of light while still being considered transparent. For example, if the general decorative features of the base layer **130** are visible through the transparent layer **120**, the transparent layer **120** will generally be considered transparent regardless of whether layer **120** scatters light.

Any suitable transparent film may be employed in the transparent layer **120**. In embodiments, a film of the transparent layer **120** is formed from a synthetic resin such as polyvinylchloride, polyvinyl fluoride, polyvinylidene fluoride, polyester, polytetrafluoroethylene, polyolefin resin, or (meth)acrylic resin.

The transparent layer **120** may be attached to the base layer **130** via any suitable process, such as laminating by emboss rolling.

The transparent layer **120** may have any suitable thickness. In embodiments, the transparent layer **120** has a thickness of between 10 micrometers and 80 micrometers, such as between 15 micrometers and 50 micrometers, or between 20 micrometers and 40 micrometers.

In general, the thickness of the transparent layer **120** of sheets as described herein may be reduced relative to transparent layers of currently available decorative sheets, which may typically be around 80 micrometers. Reduction of the thickness of the transparent layer **120** relative to transparent layers of currently available decorative sheets should not substantially negatively impact desirable properties, such as durability. As described in the Examples below, reducing thickness of the transparent layer may result in reduction in heat of combustion of the transparent layer. However, not all materials are readily manufacturable at small thicknesses.

One suitable transparent film that can be manufactured at small thicknesses, e.g. around 15 micrometers, is polyvinylidene fluoride (PVdF). As shown in the Examples below, a 30 micrometer thick PVdF film can have a gross heat of combustion of 1 MJ/m² or less.

In embodiments, decorative sheets **100** described herein have a Flame Spread Index of 15 or less, such as 10 or less, or a Smoke Developed Index of 50 or less, such as 40 or less, 30 or less, 20 or less, 15 or less, or 10 or less, when tested according to ASTM E84 (Standard Test Method for Surface Burning Characteristics of Building Materials). Currently available decorative sheets, such as DI-NOC sheets, have significantly higher flammability parameters.

In the following, non-limiting examples are presented, which describe various embodiments of the articles and methods discussed above.

### EXAMPLES

The gross heat of combustion of various decorative sheet, or layers or components thereof, was determined by oxygen bomb calorimetry. In the Examples that follow, gross heat of combustion was determined using an oxygen bomb calorimeter (IKA C5000, IKA Works, Inc., Wilmington, North Carolina) in accordance with GB/T 14402-2007 - Reaction to Fire Tests for Building Materials and Products - Determination of Heat of Combustion, which is similar to ISO 1716. Using this standard a test article is burned under standardized conditions in an oxygen bomb calorimeter calibrated by combustion of certified benzoic acid.

### Example 1: Analysis of a currently available DI-NOC film

The gross heat of combustion of a commercially available decorative sheet, DI-NOC FW334 (3M, Saint Paul, MN, USA), was determined. DI-NOC FW334 is typical of decorative sheets and has three layers - 80 micrometer thick clear polyvinylchloride (PVC) film, 80 micrometer thick decorative base PVC film, and 40 micrometer thick acrylic adhesive.

The gross heat of combustion of each layer of DI-NOC FW334 was measured separately. The results are presented below in **Table 1.**

**Table 1: Gross Heat of Combustion of DI-NOC FW334 Layers**

| **Layer** | **Gross Heat of Combustion (MJ/m²)** |
|---|---|
| 80 micrometer clear PVC | 2.48 |
| 80 micrometer decorative PVC | 2.27 |
| 40 micrometer adhesive | 1.47 |

The gross heat of combustion (PCS) for the entire decorative sheet was 6.27 megajoules per square meter. It is noted that the cumulative gross heat of combustion of the individual layers (2.48 + 2.27 + 1.47 = 6.22) was slightly less than the tested sheet (6.27). It is believed that thickness variation from batch to batch of the various layers may have been responsible for this slight variation.

### Example 2: Analysis of a various decorative sheet layers to reduce heat of combustion

Based on the results described in Example 1 above, a reduction of about 40% in gross heat of combustion was sought, with a target of about 4 MJ/m² or less. Initial targets for each layer were: Transparent layer - less than 1.0 MJ/m²; Decorative base layer - less than 2.0 MJ/m², and Adhesive layer - less than 1.0 MJ/m². It was also desired to maintain the similar film properties, such as adhesion, durability, elongation, handling, printability, and the like.

To maintain the handling and printability, it was assumed that the decorative base layer should maintain a thickness typical of decorative sheets, e.g. around 80 micrometers, such as that of the DI-NOC FW334 described above in Example 1. Accordingly, maintaining thickness of this while lowering gross heat of combustion presented unique challenges. To maintain acceptable levels of adhesion, it was assumed that the thickness of the adhesion layer needed to be similar to that of typical decorative sheets or the adhesive material would need to be modified. It was assumed that the thickness of the transparent layer could be modestly reduced without negatively impacting the desired properties of the sheet, such as durability, to reduce gross heat of combustion. However, not all materials are readily manufacturable at low thicknesses.

To achieve a decorative sheet having properties similar to commercially available sheets but with a lower PCS, a variety of materials, thicknesses, fillers and flame retardants for each of the three layers were modified to identify suitable components and layers.

For adhesives, a variety of acrylic based adhesives with, and without, flame retardants were tested for their ability to adhere the decorative sheet to a flat surface. Suitable adhesion was considered to be adhesion greater than 15N/25mm (substrate: bonderized steel plate, aging conditions: 20 degrees C for 48 hours, peel angle: 90 degrees), which was satisfied by all the tested adhesives (data not shown) for which gross heat of combustion data is presented below. The gross heat of combustion of the layers was determined by oxygen bomb calorimetry according to GB/T 14402-2007, as discussed above.

### A. Adhesive Layer

Seven adhesive samples were prepared as follows.

Sample 1: 100 parts by mass of acrylic adhesive (ACRYSET AST-8167E available from NIPPON SHOKUBAI CO., LTD., 38% solids) and 2 parts by mass of cross-linker (COLONATE L-55E available from NIPPON POLYURETHANE INDUSTRY CO., LTD., 55% solids) was mixed using a T.K. Auto Homo Mixer available from Tokushu Kika Kogyo Co., Ltd. for 5 minutes at 500 rpm. The resulting solution was coated on a silicone liner by knife coating. After drying at 65 degrees C for 5 minutes and 95 degrees C for 5 minutes, an adhesive layer thickness of 40 micrometers was formed. This corresponds to the adhesive layer of DI-NOC FW334 discussed above in Example 1.

Sample 2: 100 parts by mass of acrylic adhesive (ACRYSET AST-8167E available from NIPPON SHOKUBAI CO., LTD., 38% solids) and 2 parts by mass of cross-linker (COLONATE L-55E available from NIPPON POLYURETHANE INDUSTRY CO., LTD., 55% solids) and 11.4 parts by mass of phosphate fire retardant (PX-200 available from DAIHACHI CHEMICAL INDUSTRY CO., LTD.) was mixed using a T.K. Auto Homo Mixer available from Tokushu Kika Kogyo Co., Ltd. for 5 minutes at 500 rpm. The resulting solution was coated on a silicone liner by knife coating. After drying at 65 degrees C for 5 minutes and 95 degrees C for 5 minutes, an adhesive layer thickness of 40 micrometers was formed.

Samples 3&4: 100 parts by mass of acrylic adhesive (ACRYSET AST-8167E available from NIPPON SHOKUBAI CO., LTD., 38% solids) and 2 parts by mass of cross-linker (COLONATE L-55E available from NIPPON POLYURETHANE INDUSTRY CO., LTD., 55% solids) and 15.21 parts by mass of brominated fire retardant (Saytex 8010 available from ALBEMARLE JAPAN CORPORATION) and 4.57 parts by mass of antimony trioxide (Antimony trioxide MSA available from YAMANAKA & Co., LTD.) was mixed using a T.K. Auto Homo Mixer available from Tokushu Kika Kogyo Co., Ltd. for 5 minutes at 500 rpm. The resulting solution was coated on the silicone liner by knife coating. After drying at 65 degrees C for 5 minutes and 95 degrees C for 5 minutes, an adhesive layer thickness of 43 micrometers (Sample 3) and 33 micrometers (Sample 4) were formed.

Sample 5: 100 parts by mass of acrylic adhesive (RD2788 available from Minnesota Mining & Manufacturing Co., 40% solids) and 1.7 parts by mass of cross-linker (RD1054 available from Minnesota Mining & Manufacturing Co., 5% solids) was mixed using a T.K. Auto Homo Mixer available from Tokushu Kika Kogyo Co., Ltd. for 5 minutes at 500 rpm. The resulting solution was coated on a silicone liner by knife coating. After drying at 65 degrees C for 5 minutes and 95 degrees C for 5 minutes, an adhesive layer thickness of 30 micrometers was formed.

Sample 6: 100 parts by mass of acrylic adhesive (SK-Dyne YN-94 available from SOKEN CHEMICAL & ENGINEERING CO., LTD., 25% solids) and 0.5 part by mass of cross-linker (RD1054 available from Minnesota Mining & Manufacturing Co., 5% solids) was mixed using a T.K. Auto Homo Mixer available from Tokushu Kika Kogyo Co., Ltd. for 5 minutes at 500 rpm. The resulting solution was coated on the silicone liner by knife coating. After drying at 65 degrees C for 5 minutes and 95 degrees C for 5 minutes, an adhesive layer thickness of 24 micrometers was formed.

Sample 7: A silicone based adhesive, TL-1, was prepared as a 60/40 mixture of MQ-Resin Powder 803 TF (Wacker Chemical Corporation) and Xiameter OHX-4070 (Dow Corning). The mixture was solvent coated (50% solid in toluene), dried at 70C for 10mins, and cured by e-beam (15Mrad, 280keV).

A summary of the composition of the adhesive samples is provided in **Table 2** below.

**Table 2: Adhesive compositions**

| Sample | Base Adhesive | Cross-linker | Fire Retardant | | | Composition (A/B/C/D/E) | Thickness |
|---|---|---|---|---|---|---|---|
| | A | B | C | D | E | | |
| 1 | Acryset | Colonate | - | - | - | 100/2/0/0/0 | 40 |
| 2 | Acryset | Colonate | Phosp. | - | - | 100/2/11.4/0/0 | 40 |
| 3 | Acryset | Colonate | - | Brom. | Antim. | 100/2/0/15.1/4.57 | 43 |
| 4 | Acryset | Colonate | - | | | | 33 |
| 5 | RD2877 | RD1054 | - | - | - | 100/1.7/0/0/0 | 30 |
| 6 | SK-Dyne | RD1054 | - | - | - | 100/0.5/0/0/0 | 24 |
| 7 | TL1 | | | | | | 40 |

The gross heat of combustion (PCS) is shown in **Table 3** below.

**Table 3: Gross heat of combustion of adhesive layers**

| **Sample** | **PCS** |
|---|---|
| 1 | 1.47 |
| 2 | 1.36 |
| 3 | 1.57 |
| 4 | 1.15 |
| 5 | 0.99 |
| 6 | 0.87 |
| 7 | 0.85 |

As shown in **Table 3**, Samples 1-4 had PCS values over 1 while Samples 5-7 had PCS values less than 1. Further, the addition of flame retardants had little or no effect on PCS of the adhesive layer.

Each of the adhesives tested were suitable for adhering a decorative sheet to a flat surface (data not shown).

### B. Transparent Layer

Nine transparent layers, samples 8-16, were obtained or made as follows.

Sample 8: PVC was obtained from Tatsuta Chemical Co., Ltd. as an 82 micrometer thick film.

Sample 9: Flame-retardant treated PVC was obtained as a prototype 82 micrometer thick film from Tatsuta Chemical Co., Ltd. This film was treated with a chlorine flame retardant.

Sample 10: Flame-retardant treated PVC was obtained as a prototype 87 micrometer thick film from Kum Kang Co., Ltd. This film was loaded with 9.4 wt% phosphate flame retardant.

Sample 11: Flame-retardant treated PVC was obtained as a prototype 97 micrometer thick film from Mitsubishi Plastics, Inc. This film was treated with a phosphate flame retardant.

Sample 12: PVC was obtained as a 60 micrometer thick prototype film from Bando Chemical Industries Ltd.

Sample 13: PVC was obtained as a 40 micrometer thick prototype film (SCOTCHCAL, Sumitomo 3M Ltd.)

Sample 14: PVC was obtained as a 28 micrometer thick prototype film (SCOTCHCAL, Sumitomo 3M Ltd.)

Sample 15: Polyvinyl fluoride (PVF) was obtained as 24 micrometer thick film (TEDLAR, Dupont).

Sample 16: Polyvinylidene fluoride (PVdF) was obtained as a 30 micrometer thick film (DX-14S0230, Denki Kagaku Kabushiki Kiasha).

The gross heat of combustion (PCS) is shown in **Table 4** below.

**Table 4: Gross heat of combustion of transparent film layers**

| Sample | Base Material | Flame Retardant | Thickness (micrometer) | PCS | PCS* |
|---|---|---|---|---|---|
| 8 | PVC | - | 82 | 2.48 | 2.41 |
| 9 | PVC | Chlorine | 82 | 2.56 | 2.49 |
| 10 | PVC | Phosphate | 87 | 2.57 | 2.38 |
| 11 | PVC | Phosphate | 97 | 3.05 | 2.52 |
| 12 | PVC | - | 60 | 1.81 | |
| 13 | PVC | - | 40 | 1.14 | |
| 14 | PVC | - | 28 | 0.86 | |
| 15 | PVF | - | 24 | 0.89 | |
| 16 | PVdF | - | 30 | 0.92 | |

| | | | | | |
|---|---|---|---|---|---|
| * Estimated PCS if film was 80 micrometers thick | | | | | |

As shown in **Table 4**, organic flame retardants (chlorine and phosphate flame retardants) do not effectively lower PCS. Further, PVC film thicknesses as low as 40 micrometers did not meet the target goal of having a heat of combustion of less than 1 megajoule per square meter. PVC having a thickness of 28 micrometers did, however, meet the target PCS goal, but manufacturing of such thin PVC sheets can be costly and may produce less mechanically sound films than processes available for thicker PVC sheets. However, PVdF films can be readily manufactured at thicknesses of about 30 micrometers while still retaining good mechanical properties. In addition, 30 micron PVdF met our target PCS goal.

### C. Decorative Base Layer

Five decorative base layers, samples 17-21, were obtained or made as described below.

Sample 17: PVC was obtained from Dai Nippon Printing Co., Ltd. as an 80 micrometer thick film. This corresponds to the decorative base layer of DI-NOC FW334 discussed above in Example 1.

Sample 18: An 80 micrometer thick PVC decorative colored film loaded with 20 wt% CaCO₃ was obtained as a prototype from Bando Chemical Industries, Ltd.

Sample 19: An 80 micrometer thick decorative colored PVC film loaded with 30 wt% CaCO₃ was obtained as a prototype from Bando Chemical Industries, Ltd..

Sample 20: An 80 micrometer thick decorative colored PVC film loaded with 20 wt% Mg(OH)₂ was obtained as a prototype from Bando Chemical Industries, Ltd.

Sample 21: An 80 micrometer thick decorative colored PVC film loaded with 30 wt% Mg(OH)₂ was obtained as a prototype from Bando Chemical Industries, Ltd.

Because the organic flame retardants were ineffective in reducing PCS in either the adhesive layer or the transparent layer, non-combustible inorganic fillers were used in some of the tested films for the decorative base layer. It was assumed that adding inorganic fillers at weight percentages exceeding about 50% would undesirably limit elongation of the film, would present processing problems, and the like. Accordingly, we limited initial testing to films having a maximum of 30 wt% non-combustible organic filler.

The gross heat of combustion (PCS) is shown in **Table 5** below.

**Table 5: Gross heat of combustion of decorative base film layers**

| **Sample** | **Film Material** | **Thickness** | **PCS** |
|---|---|---|---|
| 17 | PVC | 80 | 2.27 |
| 18 | CaCO₃ 20 wt% loaded PVC | 80 | 1.84 |
| 19 | CaCO₃ 30 wt% loaded PVC | 80 | 1.62 |
| 20 | Mg(OH)₂ 20 wt% loaded PVC | 80 | 1.85 |
| 21 | Mg(OH)₂ 30 wt% loaded PVC | 80 | 1.71 |

As shown in **Table 5**, addition of 20 wt% or 30 wt% non-combustible inorganic filler reduced the PCS to the target of less than 2 megajoules per square meter. Based on these results, it is believed that a 80 micrometer thick film loaded with about 10 wt% inorganic filler would also meet, or come close to meeting, the target PCS. Accordingly, films with between 10 wt% and 40 wt% should be effective in reducing PCS to desired levels without significantly adversely affecting desired mechanical properties of the decorative base film.

While the calcium carbonate and magnesium hydroxide were about equally effective at reducing PCS, the calcium carbonate was considered to be more readily dispersible during film manufacturing and may be slightly preferred.

Based on the results presented in this Example 2, a particularly desirable decorative sheet having a PCS of less than 4 megajoules per square meter may contain: (i) a 30 micrometer thick PVdF film, such as DX-14SS0230, as a transparent layer; (ii) an 80 micrometer thick PVC film loaded with 20-30 weight percent non combustible inorganic filler as a decorative base layer; and (iii) a 24 micrometer thick acrylic adhesive layer, such as SK-Dyne YN-94.

### Example 3: Analysis of decorative sheets for gross heat of combustion

Decorative sheets that were expected to have desirable properties based on the results presented in Example 2 were prepared. Three sheets were prepared as follows.

Sheet 1: A transparent, 30 micrometer thick PVdF film (DX-14S0230, Denki Kagaku Kabushiki Kiasha) was laminated to an 80 micrometer colored (i.e., colorants added during manufacture) PVC film loaded with 10 wt% CaCO₃ (prototype from Bando Chemical Industries, Ltd) with an emboss roll at 160-170 degree C. Prior to lamination, a wood grain pattern was printed on the colored PVC film using polyvinyl acrylic inks. An acrylic pressure sensitive adhesive (SKY-Dyne YN-94, SOKEN CHEMICAL & ENGINEERING CO., LTD., 25% solids) was coated on a release liner with a knife coater and dried for 5 minutes at 90 degree C. to produce a 24 micrometer thick adhesive layer on the liner. The resulting adhesive layer was laminated to the backside of the laminated PVC film to produce the tested sample.

Sheet 2: A transparent, 30 micrometer thick PVdF film (DX-14S0230, Denki Kagaku Kabushiki Kiasha) was laminated to an 80 micrometer thick colored (HOW WAS FILM COLORED?) PVC film loaded with 20 wt% CaCO₃ (prototype from Bando Chemical Industries, Ltd) with an emboss roll at 160-170 degree C. Prior to lamination, a wood grain pattern was printed on the colored PVC film using polyvinyl acrylic inks. An acrylic pressure sensitive adhesive (SKY-Dyne YN-94, SOKEN CHEMICAL & ENGINEERING CO., LTD., 25% solids) was coated on a release liner with a knife coater and dried for 5 minutes at 90 degree C. to produce a 24 micrometer thick adhesive layer on the liner. The resulting adhesive layer was laminated to the backside of the laminated PVC film to produce the tested sample.

Sheet 3: A transparent, 30 micrometer thick PVdF film (DX-14S0230, Denki Kagaku Kabushiki Kiasha) was laminated to an 80 micrometer thick colored (HOW WAS FILM COLORED?) PVC film loaded with 30 wt% CaCO₃ (prototype from Bando Chemical Industries, Ltd) with an emboss roll at 160-170 degree C. Prior to lamination, a wood grain pattern was printed on the colored PVC film using polyvinyl acrylic inks. An acrylic pressure sensitive adhesive (SKY-Dyne YN-94, SOKEN CHEMICAL & ENGINEERING CO., LTD., 25% solids) was coated on a release liner with a knife coater and dried for 5 minutes at 90 degree C. to produce a 24 micrometer thick adhesive layer on the liner. The resulting adhesive layer was laminated to the backside of the laminated PVC film to produce the tested sample.

The gross heat of combustion (PCS) of the sheets is shown in **Table 6** below.

**Table 6: Gross heat of combustion of decorative sheets**

| | **Transparent Layer** | **Decorative Base Layer** | **Adhesive Layer** | **PCS** |
|---|---|---|---|---|
| Sheet 1 | 30um PVdF | 80 um PVC - 10wt% CaCO₃ | 24um acrylic adhesive | 3.92 |
| Sheet 2 | | 80 um PVC - 20wt% CaCO₃ | | 3.66 |
| Sheet 3 | | 80 um PVC - 30wt% CaCO₃ | | 3.53 |

As shown in **Table 6**, decorative sheets 2 and 3 had a gross heat of combustion that was very close to the expected gross heat of combustion based on the results presented in Example 2 (i.e., the expected heat of combustion of decorative sheet would equal the sum of the heat of combustion of the individual layers). The PCS of Sheet 1 was less than 4 MJ/m², verifying that a sheet having a decorative base layer with 10 weight % non-combustible inorganic filler meets the overall target PCS.

### Example 4: Analysis of decorative sheets for flammability

Sheet 1, prepared as described in Example 3, was tested for flammability according to ASTM E84 (Standard Test Method for Surface Burning Characteristics of Building Materials). The ASTM E84 test method is the technical equivalent to NFPA No. 255 and UL No. 723. This test method exposes a nominal 24 ft (7.32 m) long by 20 inch (508 mm) wide specimen to a controlled air flow and flaming fire exposure adjusted to spread the flame along the entire length of the specimen in 5.5 minutes. Flame Spread Index is a number or classification indicating a comparative measure derived from observations made during the progress of the boundary of a zone of flame under defined test conditions. Smoke Developed Index is a number or classification indicating a comparative measure derived from smoke obscuration data collected during the test for surface burning characteristics. The outcome of the test could not be predicted because it was not known whether a decorative sheet having a reduced PCS would also have reduced flammability. This is evident in light of the results presented in Example 2, where organic flame retardants had little or no effect on reducing PCS, but would have been expected to reduce flammability.

Decorative sheet 1 was laminated to a fiber-reinforced cement board, ¼ inch (6.3 mm) thickness, density 90 lb/ft³ (1444 kg/m³), Grade II per ASTM C 1186, and tested according to ASTM E84. The fiber-reinforced cement board alone was used as a negative control, and red oak flooring, 23/32 inch thickness, NOFMA (National Wood Flooring Association) certified, was used as a positive control. The results are presented below in **Table 7**.

**Table 7: Flammability according to ASTM E84**

| | **Flame Spread Index** | **Smoke Developed Index** |
|---|---|---|
| Cement board | 0 | 0 |
| Red oak flooring | 100 | 100 |
| Sheet 1 - cement board | 10 | 10 |

Previous tests of DI-NOC sheets, such as DI-NOC FW334 discussed in Example 1, typically produce a Flame Spread Index of 20-25 and a Smoke Developed Index of 70-100 when tested according to ASTM E84. The results for a DI-NOC sheet similar to DI-NOC FW334 are presented below in **Table 8.**

**Table 8: Flammability according to ASTM E84**

| | **Flame Spread Index** | **Smoke Developed Index** |
|---|---|---|
| Cement board | 0 | 0 |
| Red oak flooring | 100 | 100 |
| 3M DI-NOC Film (Category 1) | 25 | 70 |

The data obtained from sheet 1 and 3M DI-NOC Film laminated to the cement board (Table 7) are indicative of sheet 1 and 3M DI-NOC Film alone because the cement board has no Flame Spread Index or Smoke Developed Index. Accordingly, decorative sheets described herein not only have reduced gross heats of combustion but also have reduced flame spread indexes and smoke developed indexes than currently available decorative sheets (compare **Table 7** to **Table 8**).

Thus, embodiments of DECORATIVE FILM HAVING LOW GROSS HEAT OF COMBUSTION are disclosed. One skilled in the art will appreciate that the films, systems, decorative sheets, compositions, and methods described herein can be practiced with embodiments other than those disclosed. The disclosed embodiments are presented for purposes of illustration and not limitation.

## Claims

1. A decorative sheet (100) comprising:
a decorative base layer (130) comprising one or more inorganic non-combustible fillers at a weight percentage of between 10% and 50%.;
an adhesive layer (140) disposed on a surface of the decorative base layer (130); and
a transparent layer (120) disposed on an opposing surface of the base layer (130) from the adhesive layer (140),
wherein the decorative sheet (100) has a thickness of between 85 micrometers and 250 micrometers and has a gross heat of combustion of 4.0 megajoules per square meter or less when measured by oxygen bomb calorimetry using standard GB/T 14402-2007, and
wherein the adhesive layer (140) comprises a pressure sensitive adhesive.

2. A decorative sheet (100) according claim 1, wherein the decorative base layer (130) comprises one or more inorganic non-combustible fillers at a weight percentage of between 10% and 30%.

3. A decorative sheet (100) according to claim 2, wherein the one or more inorganic non-combustible fillers comprise one or more of CaCO₃, Mg(OH)₂, Al(OH)₃, SiO₂, montmorillonite, and kaolin.

4. A decorative sheet (100) according to any of claims 1-3, wherein the decorative base (130) layer comprises polyvinylchloride.

5. A decorative sheet (100) according to any of claims 1-4, wherein the adhesive layer (140) has a thickness of between 20 micrometers and 30 micrometers.

6. A decorative sheet (100) according to any of claims 1-5, wherein the transparent layer (120) has a thickness of between 20 micrometers and 40 micrometers.

7. A decorative sheet (100) according to any of claims 1-6, wherein the transparent layer (120) is formed from a material selected from the group consisting of polyvinylchloride, polyvinylidene fluoride, and polyvinylfluoride.

8. A decorative sheet (100) according to any of claims 1-6, wherein the transparent layer (120) is formed from a polyvinylidene fluoride.

9. A system (200) comprising a decorative sheet according to any of the preceding claims and a release liner (210) disposed on the adhesive layer (140) on a surface opposite the base layer (130).

## Patentansprüche

1. Dekoratives Flächengebilde (100), umfassend:
eine dekorative Basisschicht (130), umfassend einen oder mehrere anorganische, nicht brennbare Füllstoffe mit einem Gewichtsprozentsatz zwischen 10 % und 50 %;
eine auf einer Oberfläche der dekorativen Basisschicht (130) angeordnete Klebeschicht (140); und
eine auf einer gegenüberliegenden Oberfläche der Basisschicht (130) von der Klebeschicht (140) angeordnete transparente Schicht (120),
wobei das dekorative Flächengebilde (100) eine Dicke von zwischen 85 Mikrometer und 250 Mikrometer aufweist und eine Brutto-Verbrennungswärme von 4,0 Megajoules pro Quadratmeter oder weniger aufweist, wenn durch Sauerstoff-Bombenkalorimetrie unter Verwendung des Standards GB/T 14402-2007 gemessen, und
wobei die Klebeschicht (140) einen Haftklebstoff umfasst.

2. Dekoratives Flächengebilde (100) nach Anspruch 1, wobei die dekorative Basisschicht (130) einen oder mehrere anorganische, nicht brennbare Füllstoffe mit einem Gewichtsprozentsatz zwischen 10 % und 30 % umfasst.

3. Dekoratives Flächengebilde (100) nach Anspruch 2, wobei der eine oder die mehreren anorganischen, nicht brennbaren Füllstoffe eines oder mehrere von CaCO₃, Mg(OH)₂, Al(OH)₃, SiO₂, Montmorillonit und Kaolin umfassen.

4. Dekoratives Flächengebilde (100) nach einem der Ansprüche 1 bis 3, wobei die dekorative Basisschicht (130) Polyvinylchlorid umfasst.

5. Dekoratives Flächengebilde (100) nach einem der Ansprüche 1 bis 4, wobei die Klebeschicht (140) eine Dicke zwischen 20 Mikrometer und 30 Mikrometer aufweist.

6. Dekoratives Flächengebilde (100) nach einem der Ansprüche 1 bis 5, wobei die transparente Schicht (120) eine Dicke zwischen 20 Mikrometer und 40 Mikrometer aufweist.

7. Dekoratives Flächengebilde (100) nach einem der Ansprüche 1 bis 6, wobei die transparente Schicht (120) aus einem Material gebildet ist, ausgewählt aus der Gruppe, bestehend aus Polyvinylchlorid, Polyvinylidenfluorid und Polyvinylfluorid.

8. Dekoratives Flächengebilde (100) nach einem der Ansprüche 1 bis 6, wobei die transparente Schicht (120) aus einem Polyvinylidenfluorid gebildet ist.

9. System (200), umfassend ein dekoratives Flächengebilde nach einem der vorstehenden Ansprüche und eine auf der Klebeschicht (140) auf einer der Basisschicht (130) gegenüberliegenden Oberfläche angeordnete Abziehfolie (210).

## Revendications

1. Feuille décorative (100) comprenant :
une couche de base décorative (130) comprenant une ou plusieurs charges inorganiques non combustibles à un pourcentage en poids compris entre 10 % et 50 % ;
une couche adhésive (140) disposée sur une surface de la couche de base décorative (130) ; et
une couche transparente (120) disposée sur une surface opposée de la couche de base (130) à partir de la couche adhésive (140) ;
où la feuille décorative (100) a une épaisseur comprise entre 85 micromètres et 250 micromètres et a une chaleur de combustion brute de 4,0 mégajoules par mètre carré ou moins lorsqu'elle est mesurée à l'aide de la calorimétrie par bombe d'oxygène utilisant la norme GB/T 14402 - 2007, et
dans laquelle la couche adhésive (140) comprend un adhésif sensible à la pression.

2. Feuille décorative (100) selon la revendication 1, dans laquelle la couche de base décorative (130) comprend une ou plusieurs charges inorganiques incombustibles à un pourcentage en poids allant de 10 % à 30 %.

3. Feuille décorative (100) selon la revendication 2, dans laquelle l'une ou les plusieurs de charges inorganiques incombustibles comprennent un ou plusieurs de CaCO₃, Mg(OH)₂, Al(OH)₃, SiO₂, montmorillonite, et kaolin.

4. Feuille décorative (100) selon l'une quelconque des revendications 1 à 3, dans laquelle la couche de base décorative (130) comprend du polyvinylechlorure.

5. Feuille décorative (100) selon l'une quelconque des revendications 1 à 4, dans laquelle la couche adhésive (140) a une épaisseur comprise entre 20 micromètres et 30 micromètres.

6. Feuille décorative (100) selon l'une quelconque des revendications 1 à 5, dans laquelle la couche transparente (120) a une épaisseur comprise entre 20 micromètres et 40 micromètres.

7. Feuille décorative (100) selon l'une quelconque des revendications 1 à 6, dans laquelle la couche transparente (120) est formée à partir d'un matériau choisi dans le groupe constitué de chlorure de polyvinyle, fluorure de polyvinylidène, et fluorure de polyvinyle.

8. Feuille décorative (100) selon l'une quelconque des revendications 1 à 6, dans laquelle la couche transparente (120) est formée à partir d'un fluorure de polyvinylidène.

9. Système (200) comprenant une feuille décorative selon l'une quelconque des revendications précédentes et une protection détachable (210) disposée sur la couche adhésive (140) sur une surface opposée à la couche de base (130).
